Europäisches Patentamt

European Patent Office

Office européen des brevets

(19)

(11) Publication number: 0 180 647
A1

# EUROPEAN PATENT APPLICATION

published in accordance with Art. 158(3) EPC

(12)

(21) Application number: 85901598.4

(22) Date of filing: 08.04.85

Data of the international application taken as a basis:

(86) International application number:
PCT/JP85/00175

(87) International publication number:
WO85/04734 (24.10.85 85/23)

(51) Int. Cl.⁴: G 05 B 19/02

(30) Priority: 07.04.84 JP 68397/84

(43) Date of publication of application:
14.05.86 Bulletin 86/20

(84) Designated Contracting States:
DE FR GB

(71) Applicant: FANUC LTD
3580, Shibokusa Aza-Komanba Oshino-mura
Minamitsuru-gun Yamanashi 401-05(JP)

(72) Inventor: NAKASHIMA, Yoshihiro
4696-7, Aihara-machi Machida-shi
Tokyo 194-02(JP)

(74) Representative: Billington, Lawrence Emlyn et al,
HASELTINE LAKE & CO Hazlitt House 28 Southampton
Buildings Chancery Lane
London WC2A 1AT(GB)

(54) FUNCTION INSTRUCTION SYSTEM FOR A PROGRAMMABLE CONTROLLER.

(57) An instruction system for a programmable controller has a plurality of registers (R1), (R2), (R3) for storing a plurality of logically operated results performed by function instructions that execute functions necessary for controlling a machine tool, control conditions that serve as data necessary for executing function instruction means, and parameters that serve as data necessary for executing function instruction means. The results of logical operation stored in the registers (R1), (R2), (R3) can be referred to in making a sequence program. Therefore, the function instructions can be enriched, the number of steps can be reduced, and the cost can be reduced.

./...

# Fig. 3

DESCRIPTION

FUNCTIONAL INSTRUCTION SYSTEM OF

PROGRAMMABLE CONTROLLER

## Technical Field

This invention relates to a functional instruction system of a programmable controller (hereafter referred to as a "PC") and, more particularly, to a functional instruction system of a PC capable of outputting the plural results of logical operations.

## Background Art

The instructions of a PC conventionally include basic instructions and functional instructions. Basic instructions are those most used for creating sequence programs and are for performing one-bit logical operations such as AND or OR. Functional instructions, on the other hand, are prepared specially for NC machine tools and facilitate the creation of programs that would be difficult to create using basic instructions alone.

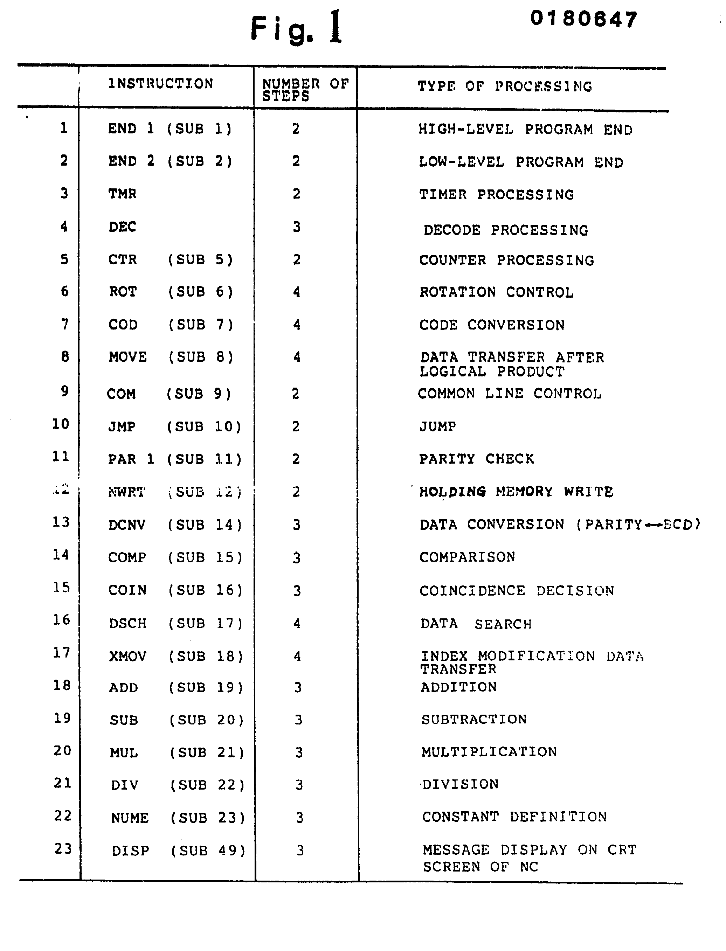

With an increase in the varieties and complexity of objects that can be placed under control, occasions in which functional instructions are used are becoming more frequent. Fig. 1 is an explanatory view illustrating functional instructions and shows that it has become possible to execute timer processing, decode processing, counter and comparison instructions, a coincidence decision, etc.

Since it is nearly impossible to operate on numerical data using a one-bit basic instruction in the PC instructions, an instruction for operating on numerical data generally is registered in advance as a functional instruction in the PC and the instruction is used upon being called by a sequence program.

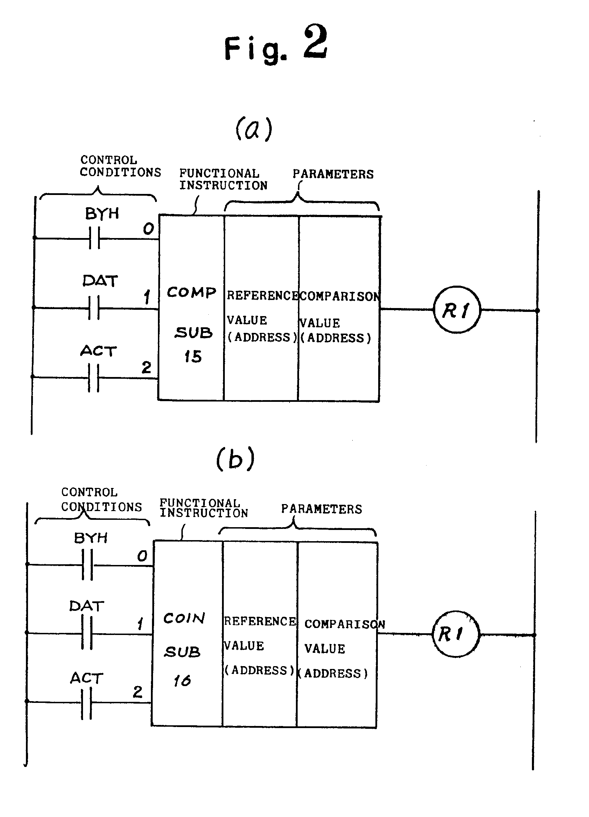

Figs. 2(a) and (b) are embodiments of PC instructions using functional instructions. Fig. 2(a) is an example execution of "Comparison 'COMP (SUB 15)'", and Fig. 2(b) is an example of execuation of "Coincidence decision 'COIN (SUB 16)'".

Let us now describe the comparison function. In this subroutine (SUB 15), a reference value and a comparison value are compared in magnitude and the result is set in R1. (1) If BYH is "0" as a control condition, the processing data is a two-digit BCD (binary coded decimal); if BYH is "1", the processing data is a four-digit BCD. (1) If DAT is "0" as a control condition, the reference value is specified by a constant; if DAT is "1", the reference value is specified by an address. (3) If ACT is "0" as a control condition, comparison processing is not carried out and R1 is unaffected; if ACT is "1", processing is executed.

If the result of processing is "0", the comparison value is less than the reference value; if "1", the comparison value is equal to or greater than the reference value.

Next, let us describe the coincidence decision function. In this subroutine (SUB 16), it is determined whether the reference value and comparison value are the same, with the result of the operation being set in R1. The control conditions are the same as those for the comparison function. If R1 is "0", the reference value does not equal the comparison value; if "1", the reference value and comparison value are equal.

Thus, functional instructions supplement a program which is difficult to create solely with basic instructions and they simplify sequence control programs.

Objects which are placed under control are growing more diversified and it has recently become necessary to perform logical operations for which the above-described functional instructions are inadequate. Let us describe one example. In a case where a reference value and comparison value are compared, it would be very convenient if (1) reference value > comparison value (2) reference value = comparison value, and (3) reference value < comparison value could be obtained simultaneously and sequence processing executed in accordance therewith. With the conventional PC instructions, however, as mentioned above, R1 is the result of this logical operation and can be expressed only as "1" or "0". By way of example, if it is attempted to obtain three results, as set forth above, then it will be necessary to execute both the comparison instruction SUB 15 and the coincidence decision SUB 16. This increases the number of steps, raises the cost of programming and makes programming a troublesome task.

Disclosure of the Invention

The present invention has been devised to solve the foregoing problems and its object is to provide a functional instruction system of a PC in which, even if the result of a logical operation comes to two or more values, these are stored in a plural-bit register and sequence processing in conformance with the result of this logical operation is executed, thereby enriching the functional instructions.

According to the present invention, the foregoing object is attained by providing a functional instruction system of a PC, the system including functional instruction means for executing functions necessary for machine tool control, means for deciding control conditions serving as data needed by the functional instruction means for execution, means for deciding parameters serving as data needed by the functional instruction means for execution, plural memory means for storing plural execution results from the functional instruction means, and means used in machine tool control for freely referring to results of logical operations stored in the plural memory means.

By providing the above-described functional instruction system of a PC, the conventional functional instructions can be enriched, the number of steps reduced and costs lowered.

## Brief Description of the Drawings

Fig. 1 is an explanatory view of PC functional instructions, Figs. 2(a) and (b) are examples of PC functional instruction formats, Fig. 3 is an example of a PC functional instruction format according to the present invention, Fig. 4 is a schematic view of a sequence program, and Fig. 5 is a flowchart showing an example of sequence processing to which the functional instruction system of the present invention is applied.

## Best Mode for Carrying Out the Invention

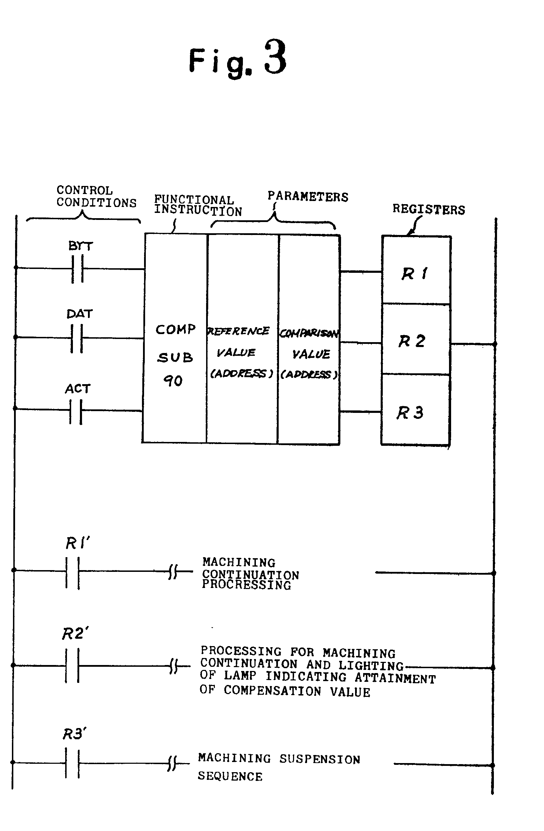

Fig. 3 illustrates a format embodying a functional instruction system according to the present invention. An embodiment of a functional instruction system will now be described in conjunction with this drawing. In this functional instruction, a reference value and a comparison value are compared and the arrangement is such that any of the three logical operation results, namely

(1) reference value < comparison value

(2) reference value = comparison value

(3) reference value < comparison value

is set in a respective one of plural-bit registers Rl - R3. The control conditions are the same as those for the comparison function of Fig. 2(a) and a description thereof is deleted. Register Rl indicates "1" if reference value > comparison value holds and "0" in all other cases.  Register R2 indicates "1" if reference value = comparison value holds and "0" in all other cases.  Register R3 indicates "1" if reference value < comparison value holds and "0" in all other cases.  If register R1 indicates "1", machining performed by a machine tool continues.  Next, if register R2 indicates "1", machining performed by the machine tool continues and the fact that a compensation value has been attained is indicated by a lamp.  If register R3 is "1", machining performed by the machine tool is suspended.

Though the plural registers R1, R2, R3 are used in this embodiment, it can be arranged to use the registers R1 and R2, wherein reference value > comparison value is set in a case where register R1 is "0", reference value < comparison value is set in a case where register R1 is "1", and reference value = comparison alue is set in a case where register R2 is "1".

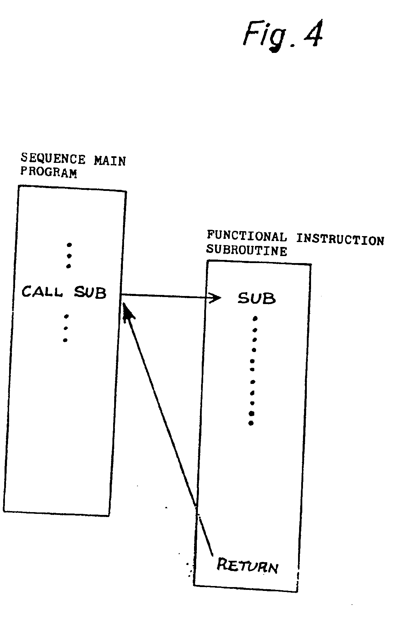

Fig. 4 is an explanatory view of this condition. A sequence main program calls the above-described functional instruction subroutine, performs plural-bit logical operations and refers sequentially to the results of these logical operations by the sequence program.

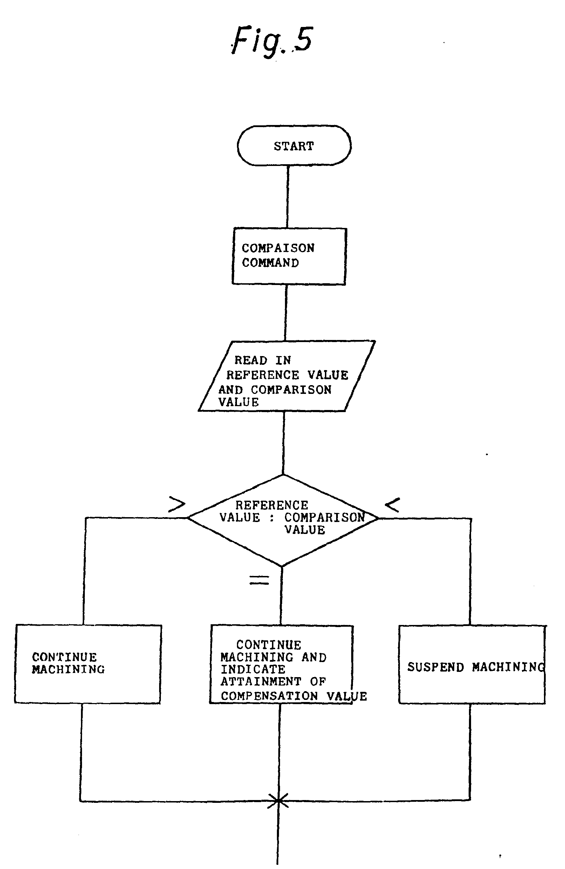

Fig. 5 is a sequence processing flowchart using the functional instruction system of the present invention.  According to the flowchart,

(1) when a comparison command is issued by the sequence program, the functional instruction subroutine

(2) reads in the reference value and comparison value and

(3) compares the reference value and the comparison value.

(4) If the result is reference value > comparison value, machining performed by the machine tool continues; if the result is reference value = comparison value, machining performed by the machine tool continues and an indication is made showing that a compensation value has attained the reference value; and if the result is reference value < comparison value, machining performed by the machine tool is suspended.

Industrial Applicability

The present invention is not limited to the PC instruction "comparison" of the illustrated embodiment but can be applied to other PC instructions, such as "coincidence decision" and "rotation control". Also, the invention not limited to the registers R1, R2, R3 for storing the results of operations, for it goes without saying that a required number of registers in excess of the above can be provided.

CLAIMS:

1. A functional instruction system of a programmable controller, comprising:

functional instruction means for executing functions necessary for machine tool control;

means for deciding control conditions serving as data needed by the functional instruction means for execution;

means for deciding parameters serving as data needed by the functional instruction means for execution;

plural memory means for storing plural execution results from said functional instruction means; and

means used in machine tool control for freely referring to results of logical operations stored in said plural memory means.

2. A functional instruction system of a programmable controller according to claim 1, characterized in that said plural memory means is a plurality of registers each comprising one bit.

# Fig. 1

| | INSTRUCTION | NUMBER OF STEPS | TYPE OF PROCESSING |
|---|---|---|---|
| 1 | END 1 (SUB 1) | 2 | HIGH-LEVEL PROGRAM END |
| 2 | END 2 (SUB 2) | 2 | LOW-LEVEL PROGRAM END |
| 3 | TMR | 2 | TIMER PROCESSING |
| 4 | DEC | 3 | DECODE PROCESSING |
| 5 | CTR (SUB 5) | 2 | COUNTER PROCESSING |
| 6 | ROT (SUB 6) | 4 | ROTATION CONTROL |
| 7 | COD (SUB 7) | 4 | CODE CONVERSION |
| 8 | MOVE (SUB 8) | 4 | DATA TRANSFER AFTER LOGICAL PRODUCT |
| 9 | COM (SUB 9) | 2 | COMMON LINE CONTROL |
| 10 | JMP (SUB 10) | 2 | JUMP |
| 11 | PAR 1 (SUB 11) | 2 | PARITY CHECK |
| 12 | NWRT (SUB 12) | 2 | HOLDING MEMORY WRITE |
| 13 | DCNV (SUB 14) | 3 | DATA CONVERSION (PARITY←ECD) |
| 14 | COMP (SUB 15) | 3 | COMPARISON |
| 15 | COIN (SUB 16) | 3 | COINCIDENCE DECISION |
| 16 | DSCH (SUB 17) | 4 | DATA SEARCH |
| 17 | XMOV (SUB 18) | 4 | INDEX MODIFICATION DATA TRANSFER |
| 18 | ADD (SUB 19) | 3 | ADDITION |
| 19 | SUB (SUB 20) | 3 | SUBTRACTION |
| 20 | MUL (SUB 21) | 3 | MULTIPLICATION |
| 21 | DIV (SUB 22) | 3 | DIVISION |
| 22 | NUME (SUB 23) | 3 | CONSTANT DEFINITION |
| 23 | DISP (SUB 49) | 3 | MESSAGE DISPLAY ON CRT SCREEN OF NC |

# Fig. 2

## (a)

CONTROL
CONDITIONS    FUNCTIONAL
INSTRUCTION    PARAMETERS

BYH    0

DAT    1    COMP    REFERENCE    COMPARISON
SUB    VALUE    VALUE
15    (ADDRESS)    (ADDRESS)

ACT    2

R1

## (b)

CONTROL
CONDITIONS    FUNCTIONAL
INSTRUCTION    PARAMETERS

BYH    0

DAT    1    COIN    REFERENCE    COMPARISON
SUB    VALUE    VALUE
16    (ADDRESS)    (ADDRESS)

ACT    2

R1

# Fig. 3

CONTROL CONDITIONS | FUNCTIONAL INSTRUCTION | PARAMETERS | REGISTERS

BYT

DAT

ACT

COMP SUB 90

REFERENCE VALUE (ADDRESS)

COMPARISON VALUE (ADDRESS)

R 1

R 2

R 3

R1'

MACHINING CONTINUATION PROCRESSING

R2'

PROCESSING FOR MACHINING CONTINUATION AND LIGHTING OF LAMP INDICATING ATTAINMENT OF COMPENSATION VALUE

R3'

MACHINING SUSPENSION SEQUENCE

Fig. 4

SEQUENCE MAIN
PROGRAM

FUNCTIONAL INSTRUCTION
SUBROUTINE

CALL SUB → SUB

RETURN

# Fig. 5

START

COMPAISON
COMMAND

READ IN
REFERENCE VALUE
AND COMPARISON
VALUE

REFERENCE
VALUE : COMPARISON
VALUE

>

<

=

CONTINUE
MACHINING

CONTINUE
MACHINING AND
INDICATE
ATTAINMENT OF
COMPENSATION VALUE

SUSPEND MACHINING

# INTERNATIONAL SEARCH REPORT

0180647

International Application No. PCT/JP85/00175

## I. CLASSIFICATION OF SUBJECT MATTER (if several classification symbols apply, indicate all) ³

According to International Patent Classification (IPC) or to both National Classification and IPC

Int. Cl$^4$     G05B19/02

## II. FIELDS SEARCHED

| Minimum Documentation Searched ⁴ | |
|---|---|
| Classification System | Classification Symbols |
| IPC | G05B19/00-19/42 |

| Documentation Searched other than Minimum Documentation to the Extent that such Documents are Included in the Fields Searched ⁵ |
|---|
| Jitsuyo Shinan Koho    .  1926-1984 |
| Kokai Jitsuyo Shinan Koho    1971-1984 |

## III. DOCUMENTS CONSIDERED TO BE RELEVANT ¹⁴

| Category* | Citation of Document, ¹⁶ with indication, where appropriate, of the relevant passages ¹⁷ | Relevant to Claim No. ¹⁸ |
|---|---|---|
| X | JP, A, 54-34730 (Mitsubishi Electric Corp.) 14 March 1979 (14. 03. 79) Page 156, right column, 8th line from the bottom to page 157, right column, 2nd line from the bottom (Family : none) | 1-2 |
| X | JP, A, 54-34731 (Mitsubishi Electric Corp.) 14 March 1979 (14. 03. 79) Page 162, right column, 6th line from the bottom to page 163, right column, 11th line from the bottom (Family : none) | 1-2 |
| X | JP, A, 49-112359 (Toyoda Machine Works, Ltd.) 25 October 1974 (25. 10. 74) Page 350, right column, 7th line from the bottom to page 351, left column, 8th line from the bottom & US, A, 3,889,238 & GB, A, 1,454,643 | 1-2 |

* Special categories of cited documents: ¹⁵

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search ³ | Date of Mailing of this International Search Report ² |
|---|---|
| June 26, 1985    (26. 06. 85) | July 8, 1985    (08. 07. 85) |
| International Searching Authority ¹ | Signature of Authorized Officer ²⁰ |
| Japanese Patent Office | |